# EUROPEAN PATENT APPLICATION

(11) **EP 4 343 361 A1**
(43) Date of publication of application: **27.03.2024**
(21) Application number: 22196726.8
(22) Date of filing: 20.09.2022
(51) Int. Cl.: G01S 7/00, G01S 7/481, G01S 13/89, G01S 13/93, G01S 17/89, G01S 17/93

(54) **A SENSOR SYSTEM AND A METHOD FOR A MINING VEHICLE**

(71) Applicant: Sandvik Mining and Construction Oy, 33330 Tampere (FI)
(72) Inventor: PUURA, Jussi, 33311 Tampere (FI)
(74) Representative: Sandvik

(57) **Abstract**

Example embodiments provide a sensor system in a mining vehicle. The sensor system comprises at least one sensor configured to scan surroundings of the mining vehicle, at least one computing device configured to execute a plurality of applications, a managed switch connected to the at least one sensor and the at least one computing device, wherein the managed switch is connected to the at least one computing device from via a first port of the managed switch configured to forward data for a first application of the plurality of applications and from via at least one second port configured to forward data for at least one second application of the plurality of applications, and wherein the managed switch is configured to send measurement data of the surroundings from the at least one sensor to the first port and send a copy of the measurement data to the at least one second port.

## Description

### TECHNICAL FIELD

The present application generally relates to mining vehicles. In particular, some example embodiments of the present application relate to a sensor system of a mining vehicle configured to provide measurement data from at least one sensor to a plurality of applications via a managed switch.

### BACKGROUND

A mining vehicle may have multiple applications which use sensors for different tasks. Each application may receive data from a separate sensor configured based on requirements of the application.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments may enable sending the data received from one or more sensors configured to scan surroundings of a mining vehicle to a plurality of applications. At least one computing device configured to execute the plurality of applications and the one or more sensors are connected via a managed switch. As the plurality of applications receive data from the one or more sensors via the managed switch, monitoring the surroundings of the mining vehicle may be implemented more cost-efficiently. Hence, the applications may be executed as isolated processes while delay for receiving the data may be minimized between the different applications.

According to a first aspect, there is provided a sensor system in a mining vehicle. The sensor system comprises at least one sensor configured to scan surroundings of the mining vehicle; at least one computing device configured to execute a plurality of applications; a managed switch connected to the at least one sensor and the at least one computing device, wherein the managed switch is connected to the at least one computing device via a first port configured to forward data for a first application of the plurality of applications and via at least one second port configured to forward data for at least one second application of the plurality of applications; and wherein the managed switch is configured to send measurement data of the surroundings from the at least one sensor to the first port and send a copy of the measurement data to the at least one second port.

In an embodiment, the at least one sensor comprises a light detection and ranging sensor.

In an embodiment, in addition or alternatively, the at least one sensor comprises a radio detection and ranging sensor.

In an embodiment, in addition or alternatively, the at least one sensor comprises a time-of-flight camera.

In an embodiment, in addition or alternatively, the plurality of applications comprises at least one vehicle safety application.

In an embodiment, in addition or alternatively, the at least one sensor is configured to provide the measurement data based on parameter settings of the vehicle safety application.

In an embodiment, in addition or alternatively, the plurality of applications comprise an application configured for at least one of collision avoidance, access detection on working area of a boom the mining vehicle, obstacle detection, localization or mapping.

In an embodiment, in addition or alternatively, the at least one sensor is configured to scan the surroundings below an attachment point of a boom of the mining vehicle.

According to a second aspect, there is provided a mining vehicle comprising the sensor system according to the first aspect, and wherein the at least one sensor is installed to a front side of a carrier of the mining vehicle in a forward driving direction of the mining vehicle.

In an embodiment, the front side of the carrier comprises at least one installation slot configured to form a recess, wherein the at least one sensor is mounted within the recess, and wherein the recess has bevelled sides to enable the at least one sensor to scan at least an area in the forward driving direction of the mining vehicle.

In an embodiment, in addition or alternatively, the at least one installation slot is located in at least one side of the front of the carrier and the installation slot has a bevelled side extending to at least one side of the mining vehicle such that the at least one sensor is enabled to scan an area located by the at least one side of the mining vehicle.

In an embodiment, in addition or alternatively, the mining vehicle comprises at least one boom, and the at least one sensor is installed in the carrier below an attachment point of the boom.

In an embodiment, in addition or alternatively, the at least one sensor is installed to a bumper of the mining vehicle.

According to a third aspect, there is provided a method for delivering measurement data of surroundings of a mining vehicle. The method comprises configuring a first port of a managed switch for a first application of a plurality of applications stored on at least one computing device; configuring at least one second port to at least one second application of the plurality of applications stored on the at least one computing device; sending, by the managed switch, measurement data received from at least one sensor configured to scan the surroundings of the mining vehicle to the first port; and sending , by the managed switch, copies of the measurement data to the at least one second port of.

According to a fourth aspect, there is provided a computer program comprising instructions which, when executed by a computer, causes the computer to execute the method according to the third aspect.

Many of the attendant features will be more readily appreciated as they become better understood by reference to the following detailed description considered in connection with the accompanying drawings.

### BRIEF DESCRIPTION OF THE DRAWINGS

The accompanying drawings, which are included to provide a further understanding of the example embodiments and constitute a part of this specification, illustrate example embodiments and together with the description help to explain the principles of the example embodiments. In the drawings:
**FIG. 1** illustrates an example of a sensor system in a mining vehicle, according to an example embodiment;
**FIG. 2** illustrates a partial view of a mining vehicle comprising a plurality of booms and an example placement of a sensor in the mining vehicle, according to an example embodiment;
**FIG. 3** illustrates a partial view of a mining vehicle and an example placement of a sensor in the mining vehicle viewed from the side of the mining vehicle, according to an example embodiment;
**FIG. 4** illustrates an example of a partial view of a mining vehicle and an example of placement of a plurality of sensors in a mining vehicle, according to an example embodiment;
**FIG. 5** illustrates an example of a field-of-view of sensors mounted to installation slots in lower front corner sections of a mining vehicle, according to an example embodiment; and
**FIG. 6** illustrates an example of a method for delivering measurement data of surroundings of a mining vehicle, according to an example embodiment.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present examples may be constructed or utilized. The description sets forth the functions of the example and a possible sequence of operations for constructing and operating the example. However, the same or equivalent functions and sequences may be accomplished by different examples.

A single mining vehicle may have multiple subsystems that use data from different sensors. The multiple subsystems may comprise different applications, for example, for monitoring surroundings of the mining vehicle.

If all the applications have a dedicated sensor, a bill of materials of the mining vehicle may become large and manufacturing of the mining vehicle may become expensive. The bill of materials may comprise an inventory of the raw materials, sub-assemblies, intermediate assemblies, sub-components, parts, and the respective quantities needed to manufacture the mining vehicle, associated with respective prices. Further, the sensors may be provided at different installation locations, which installation locations may be scarce in the mining vehicle. It may be difficult to find installation locations for the sensors that would fit to all purposes required by a plurality of applications.

In an example embodiment, a managed switch may be connected with at least one sensor. Further, at least one computing device may be configured to execute a plurality of applications. The at least one sensor may be configured by the at least one computing device based on parameter settings of a first application of the plurality of applications. The at least one sensor may be configured to send measurement data for the first application via the managed switch. The managed switch may be further configured to send copies of the measurement data to the at least one computing device for at least one second application of the plurality of applications. Hence, the other applications may be configured to eavesdrop data sent from the at least one sensor for the first application.

Because the measurement data from the same sensor is received by multiple applications, the bill of materials of the mining vehicle may be reduced. Further, complexity of the installations required for functioning of the plurality of applications may be reduced, including the number of required sensors, current feeds, and wiring. Hence, simplicity in service provided by the plurality of applications and a reduced number of failure points in the required installations may be achieved.

In an example embodiment, the at least one sensor may be placed in a front side of a carrier of the mining vehicle in a forward driving direction of the mining vehicle. For example, the at least one sensor may be placed in at least one corner section of a carrier of the mining vehicle. The at least one corner section of the carrier of the mining vehicle may comprise, for example, a lower front corner of the mining vehicle. The corner section may comprise, for example, an area on the carrier located at or near a corner of the carrier, such as an edge of sides of the carrier or a corner of the sides. A lower corner or corner section may refer to a corner located nearer to a bottom of the carrier than a roof of the carrier. The lower front corner may comprise, for example, a corner section of the carrier located below booms of the mining vehicle. A carrier may comprise equipment for moving the mining vehicle, such as, for example, a motor and wheels. The location at the lower front corner section may enable the at least one sensor to scan the surroundings at an area suitable for providing measurement data for multiple different applications. For example, the at least one sensor located at the lower front corner section may enable the sensor to be configured to scan the surroundings at an area comprising an area in front of the mining vehicle in a forward driving direction of the mining vehicle for collision avoidance purposes and simultaneously an area covering both sides of the mining vehicle and the front of the mining vehicle for access detection purposes. The different applications may comprise one or more vehicle safety applications, such as applications for collision avoidance or access detection on a working area of at least one boom of a mining vehicle. The vehicle safety applications may be also referred to as safety function related applications. Access detection may comprise detecting entrance of objects or people to the working area of the boom. The multiple applications may further comprise one or more vehicle non-safety critical applications, such as applications for simultaneous localization and mapping system or non-critical obstacle detection used for autonomous path planning preparations. The vehicle non-safety critical applications may be also referred to as non-safety function related applications.

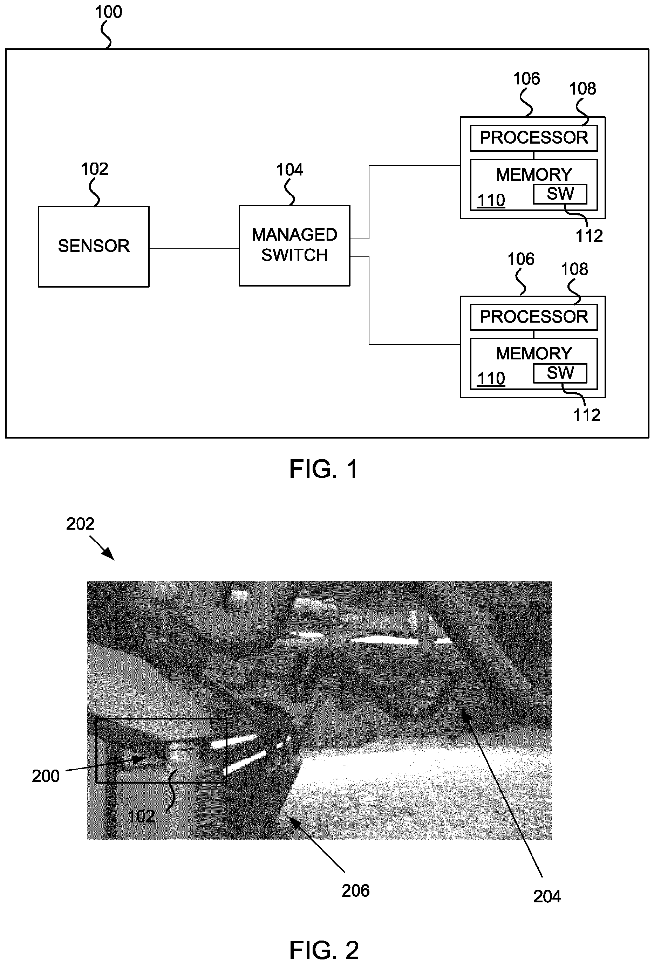

FIG. 1 illustrates an example of a sensor system 100 in a mining vehicle. In an embodiment, the sensor system 100 may comprise the mining vehicle. The mining vehicle may be, for example, a rock drilling rig, a bolting rig or a loader.

The sensor system 100 may comprise at least one sensor 102 configured to scan the surroundings of the mining vehicle. The mining vehicle may be a mobile mining vehicle and the at least one sensor 102 may be configured to scan the surroundings along a path of the mining vehicle. In an embodiment, the at least one sensor 102 may comprise a light detection and ranging (lidar) sensor. A lidar sensor may be configured to determine a range by targeting an object with a laser and measuring the time for the reflected light to return to a receiver of the lidar sensor. In an embodiment, the at least one sensor 102 may comprise a radio detection and ranging (radar) sensor. A radar sensor may be configured to transmit electromagnetic energy toward objects and observing the echoes returned from the objects. In an embodiment, the at least one sensor 102 may comprise a time-of-flight (ToF) camera. The ToF camera may be configured to determine a distance between the camera and a subject by measuring a round trip time of an artificial light signal provided by a laser or a light-emitting diode (LED).

The sensor system 100 may comprise at least one computing device 106. The at least one computing device 106 may be configured to execute a plurality of applications. The plurality of applications may be executed by the at least one computing device 106 as isolated processes. Process isolation is a set of different hardware and software technologies designed to protect each process from other processes on the operating system. Hence, the at least one computing device 106 may be configured such that different applications function independently from each other. In an embodiment, at least some of the plurality of applications may be stored and executed on a same computing device 106. In an embodiment, the sensor system 100 may comprise a plurality of computing devices 106 and at least some of the plurality of applications may be stored and executed on different computing devices 106 such as a first computing device and a second computing device.

In an embodiment, the plurality of applications comprises at least one vehicle safety application. In general, a vehicle safety application may be configured to avoid human injury, human death, damage to property, financial loss, damage to the natural environment, or devastating systemic effects. The vehicle safety application may be designed to assure safe use of systems involving a hazard, such as mobile mining vehicles. The vehicle safety application may comprise, for example, at least one of a collision avoidance application or an access detection application.

The application for collision avoidance may be also referred to as a forward collision warning or collision mitigation. The collision avoidance application may be designed to prevent or reduce the severity of a collision. For example, the collision avoidance application may be configured to monitor speed of the mining vehicle, a speed of an object in front of the mining vehicle, and a distance between the mining vehicle and object(s) in the path of the mining vehicle. The object(s) may be detected within a field-of-view of sensors configured for scanning the surroundings of the mining vehicle. Data received from the sensors may be processed by the application. Thereafter, a controller may be configured to send a signal to a control system of the mining vehicle in order to avoid an obstacle or to intervene in a hard-wired manner to avoid the obstacle. The collision avoidance application may be configured to intervene, for example, if an obstacle detection application and proactive planning systems of the mining vehicle fail to steer around detected obstacles or collision risks.

The access detection application may be configured to monitor for objects, such as people, located within an area of one or more booms of the mining vehicle. The access detection may be used, for example, to detect objects when the mining vehicle has stopped, but is performing an operation. Hence, a working area may be monitored such that for example booms of the mining vehicle may be operated safely. The working area may comprise, for example, areas within a reach of the booms such as below, behind and next to the booms.

The plurality of applications may further comprise one or more vehicle non-safety critical applications. A vehicle non-safety critical application may be configured to increase safety of the mining vehicle or to enable automated functions such as autonomous driving. Although the vehicle non-safety critical applications may be configured to contribute to the layers of safety by proactively reducing risk of entering hazardous situations, the vehicle non-safety critical applications may not be considered as safety critical intervention systems that react to an imminent hazard. Thus, the vehicle non-safety critical applications may be considered as non-safety critical functions. The vehicle non-safety critical applications may comprise, for example, at least one of a simultaneous localization and mapping (SLAM) application or the obstacle detection application.

The obstacle detection application may be used, for example, for autonomous path planning preparation. Hence, the obstacle detection may be used for non-critical tasks such as mapping surroundings of the mining vehicle to enable the mining vehicle to drive autonomously or semi-autonomously.

The simultaneous localization and mapping application may be configured to construct or update a map of an unknown environment while simultaneously keeping track of a location of the mining vehicle within it. The map may be constructed by the application using several algorithms based on concepts in computational geometry and computer vision, such as a particle filter, an extended Kalman filter or a covariance intersection.

The sensor system 100 may further comprise a switch such as a managed switch 104. A managed switch may be a configurable switch device. The managed switch 104 may comprise a plurality of ports. Each port may be configured, for example, to enable monitoring and controlling traffic by the managed switch. The least one sensor 102 and the at least one computing device 106 may be connected to the managed switch 104, for example, via the plurality of ports. Hence, the at least one computing device 106 may be configured to receive data from the at least one sensor 102 via the managed switch 104. A port may be configured for a specific application of the plurality of applications.

The managed switch 104 may be configured for port mirroring. In general, port mirroring may be used on a network switch to send a copy of network packets seen on a specified ports (source ports) to other specified ports (destination ports). A network switch is configured to forward data packets between devices. The managed switch 104 is an example of a network switch. The port mirroring may enable that the data packets sent to one specific port can be monitored and/or analysed by applications associated with other specified ports. The managed switch 104 may comprise multiple (destination) ports connected to a same computing device 106, the ports being configured to forward data packets for separate applications executed on the same computing device 106. Alternatively, the managed switch 104 may comprise multiple (destination) ports connected to a plurality of computing devices 106, the ports being configured for different applications executed on the plurality of computing devices 106. The managed switch 104 may comprise at least a first port configured to forward data packets to a first application of the plurality of applications and at least a second port configured to forward data packets to at least one second application of the plurality of applications. The data packets may comprise measurement data from the at least one sensor 102. Instead of the managed switch, the sensor system 100 may comprise another type of a switch, such as an unmanaged switch. The unmanaged switch may be preconfigured for port mirroring as above.

The first application may comprise certain parameter settings for scanning the surroundings. The at least one computing device 106 may be configured to configure the at least one sensor 102 based on the parameter settings of the first application. The first application may comprise a vehicle safety application. The first application may comprise, for example, the collision avoidance application. Configuring the at least one sensor 102 based on the parameter settings of the first application may enable that the configuration of the at least one sensor 102 is not mixed up by different settings of multiple applications. For example, certain settings may be required on the at least one sensor 102 for safety reasons, such as for correct functioning of a vehicle safety application. The parameter settings may comprise, for example, at least one of an angular resolution of the at least one sensor 102, a range resolution of the at least one sensor 102, a measurement rate of the at least one sensor 102, a range of the at least one sensor 102, a field of view of the at least one sensor 102, or a measurement mode of the at least one sensor 102.

In an embodiment, the managed switch 104 may be configured to forward measurement data received from the at least one sensor 102 to the first port configured for the first application. The managed switch 104 may be further configured to send copies of the measurement data to port(s) configured for at least one second application of the plurality of applications. In an embodiment, the managed switch 104 may be configured to use a user datagram protocol (UDP) for sending the copies of the measurement data. The UDP is a message-oriented transport layer protocol suitable for time-sensitive applications. UDP enables that the applications may not have to wait for packets delayed due to retransmission, as waiting for packets is not an option in a real-time system, such as in safety applications. Alternatively, the managed switch 104 may be configured to use any technique supporting multicast. Multicast refers to group communication, where data transmission is addressed to a group of destination devices simultaneously. For example, the managed switch 104 may be configured to broadcast the measurement data. Broadcasting is a method of addressing/transferring a message to all available devices in a network simultaneously.

The at least one computing device 106 may comprise at least one processor 108. The at least one processor 108 may comprise, for example, one or more of various processing devices, such as for example a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a neural processing unit (NPU), a hardware accelerator, a special-purpose computer chip, or the like.

The at least one computing device 106 may further comprise at least one memory 110. The memory 110 may be configured to store, for example, computer program code 112 or the like, for example, operating system software and one or more application software. The memory 110 may comprise one or more volatile memory devices, one or more non-volatile memory devices, and/or a combination thereof. For example, the memory may be embodied as magnetic storage devices (such as hard disk drives, magnetic tapes, etc.), optical magnetic storage devices, or semiconductor memories (such as mask ROM, PROM (programmable ROM), EPROM (erasable PROM), flash ROM, RAM (random access memory), etc.).

The computing device 106 may further comprise a communication interface configured to enable the computing device 106 to transmit information to and/or receive information from other devices. The devices may comprise, for example, the at least one sensor 102 configured to scan surroundings of the mining vehicle, such as one or more lidar sensors. The devices may further comprise the managed switch 104. The communication interface may be configured to provide at least one wireless radio connection, such as for example a 3GPP mobile broadband connection (e.g., 3G, 4G, 5G). However, the communication interface may be configured to provide one or more other types of connections, for example, a wireless local area network (WLAN) connection such as, for example, standardized by IEEE 802.11 series or Wi-Fi alliance; a short range wireless network connection such as for example a Bluetooth, NFC (near-field communication), or RFID connection; a wired connection such as, for example, a local area network (LAN) connection, a universal serial bus (USB) connection or an optical network connection, or the like; or a wired Internet connection. The communication interface may comprise, or be configured to be coupled to, at least one antenna to transmit and/or receive radio frequency signals. One or more of the various types of connections may be also implemented as separate communication interfaces, which may be coupled or configured to be coupled to a plurality of antennas.

The at least one computing device 106 may comprise a user interface. The user interface may comprise at least one of an input device or an output device. The input device may take various forms such a keyboard, a touch screen, or one or more embedded control buttons. The output device may, for example, comprise a display, a haptic device, and/or a speaker. The at least one computing device 106 may be configured to output data on surroundings of the mining vehicle to an operator via the output device. The data may be provided as at least one of a visual signal, a haptic feedback, or an audible signal. Alternatively, or in addition, the computing device 106 may be configured to output data to an autonomous driving system of the mining vehicle. The data on surroundings of the mining vehicle may comprise data on safety, such as information on obstacles and/or instructions to avoid the obstacles.

The computing device 106 may comprise for example, a server device, a client device, a mobile phone, a tablet computer, a laptop, or the like. In an embodiment, the computing device 106 may comprise a control unit of the mining vehicle, such as a control unit of the autonomous driving system. Although the at least one computing device 106 is illustrated as a single device it is appreciated that, wherever applicable, functions of the at least one computing device 106 may be distributed to a plurality of devices.

When the at least one computing device 106 is configured to implement some functionality, some component and/or components of the computing device 106, such as for example the at least one processor 108 and/or the memory 110, may be configured to implement this functionality. Furthermore, when the at least one processor 108 is configured to implement some functionality, this functionality may be implemented using program code 112 comprised, for example, in the memory 110. The implementing the functionality may comprise, for example, executing at least one of the plurality of applications. In addition, or alternatively, the implementing the functionality may comprise configuring one or more ports of the managed switch 104. In addition, or alternatively, implementing the functionality may comprise configuring the at least one sensor 102.

The functionality described herein may be performed, at least in part, by one or more computer program product components such as software components. According to an embodiment, the computing device 106 comprises a processor 108 or processor circuitry, such as for example a microcontroller, configured by the program code 112 when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), Graphics Processing Units (GPUs), neural processing units (NPUs) and tensor processing units (TPUs).

The computing device 106 comprises means for performing at least one method described herein. In one example, the means comprises the at least one processor 108, the at least one memory 110 including instructions which, when executed by the at least one processor 108, cause the computing device 106 to perform the method.

FIG. 2 illustrates a partial view of a mining vehicle comprising a plurality of booms and an example placement of a sensor in the mining vehicle, according to an example embodiment. The sensor may be, for example, the at least one sensor 102 of the sensor system 100.

A mining vehicle may have one or more structural body members that at least partially block the view of a sensor configured to scan surroundings of the mining vehicle. A structural body member of a mining vehicle may comprise, for example, a boom, a bucket, a carrier, or the like. For example, the mining vehicle may be a drilling rig. The mining vehicle may comprise one or more booms attached to the carrier of the mining vehicle. If a sensor was installed in the booms, the sensor would be exposed to harsh conditions and vibrations. Also, placing sensors in booms causes the sensors to move with the booms. Movement of the sensors with the booms could introduce a calibration and accuracy problem since the sensors would not be static with respect to the drilling rig. Further, if a sensor is placed on top of the carrier of the mining vehicle, the view may be obstructed, at least occasionally, by the one or booms such that the sensor cannot monitor the area below the booms. Although the booms are used as an example, the view may be limited also by other structural body members and the example solutions described herein are applicable in such cases also.

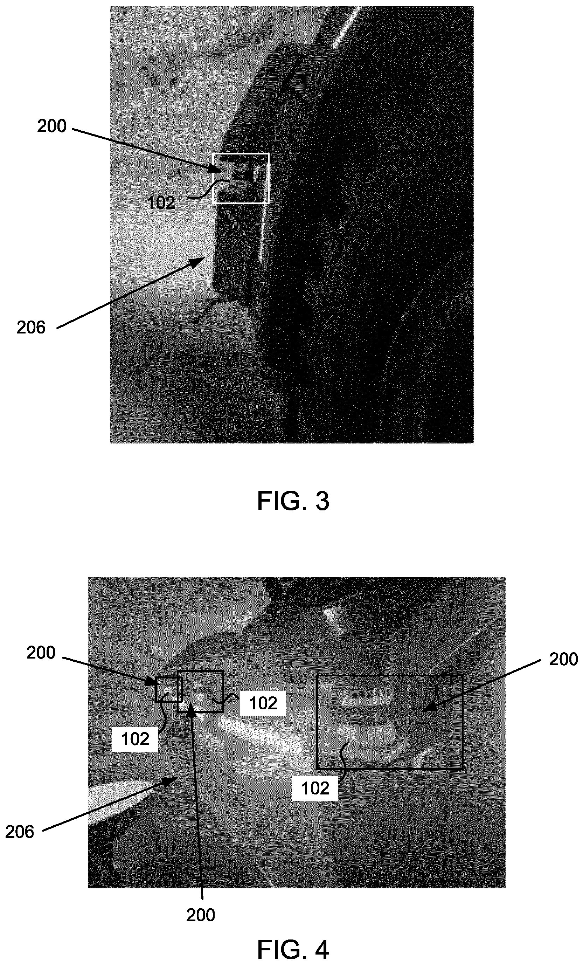

The sensors 102 may be mounted, for example, to a front side of the carrier in a forward moving direction of the mining vehicle. In an embodiment, the sensor 102 may be mounted to the carrier of the mining vehicle 202 below the booms 204. The sensor 102 may be provided, for example, below an attachment point where at least one boom is attached to the carrier. For example, the sensor 102 may be attached to a bumper 206 of the mining vehicle 202. In an embodiment, the sensor 102 may be provided at, for example, at least one lower front corner section of the mining vehicle 202. In an embodiment, the sensor 102 may be provided at both lower front corner sections of the mining vehicle 202. The lower front corner section may comprise the bumper 206 of the mining vehicle 202. The sensor 102 may be provided at, for example, at least one side of the bumper 206. The lower front corner section may comprise a section in the carrier front. The lower front corner section may be located, for example, below at least one of a horizontal center line of the carrier front or below the attachment point of the at least one boom. FIG. 3 illustrates a partial view of the mining vehicle 202 and an example placement of the sensor 102 in the mining vehicle 202 viewed from the side of the mining vehicle 202, according to an example embodiment.

The mining vehicle 202 may comprise an installation slot 200 for the sensor 102. The installation slot 200 may be provided, for example, at the bumper 206 of the mining vehicle. The installation slot 200 may be formed to provide a recess configured to fit the sensor 102 within the recess. For example, the sensor 102 may be mounted within the recess such that it is completely inside an outline of the bumper 206. Hence, the sensor 102 may be protected from impacts, such as impacts caused by movement of the booms 204 or collisions to walls. The installation slot 200 may be open towards the forward driving direction of the mining vehicle 202. Hence, the sensor 102 may be configured to scan an area in front of the mining vehicle 202. The recess may further have bevelled sides to enable the at least one sensor 102 to scan at least an area in front of the mining vehicle 202 while being installed within the bumper or the carrier.

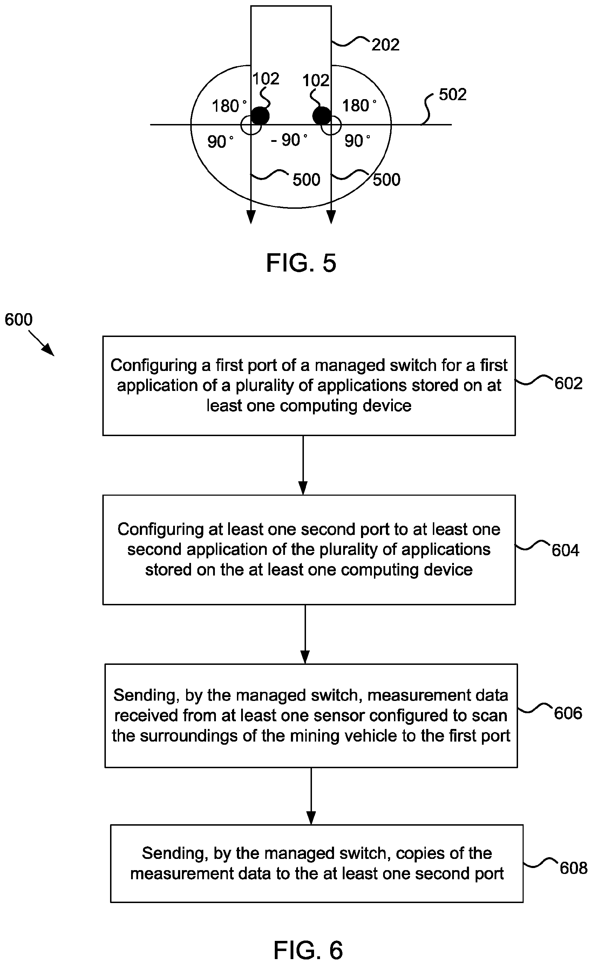

The bevelled sides may enable extending the field of view of the sensor 102. The area in front of the mining vehicle 202 may comprise up to 180 degrees measured from side to side of the mining vehicle 202 (e.g. +/- 90 degrees with respect to moving direction 500 of the mining vehicle 202 illustrated in FIG. 5). The area in front of the mining vehicle 202 may comprise the area below and behind the booms 204 in a scan direction of the at least one sensor 102 towards the forward driving direction of the mining vehicle. Hence, positioning the sensor 102 in the front lower corner section, such as to the side of the bumper 206 of the mining vehicle, may enable the sensor 102 to detect obstacles or people that are behind, below or amidst the booms 204 extending to a forward driving direction of the mining vehicle 202.

The bevelled sides may be configured to provide an unobstructed view to at least one side of the mining vehicle 202 in addition to the area in front of the mining vehicle 202. In an embodiment, the installation slot 200 may be configured to provide up to 270 degrees view for the sensor 102 (e.g. from -90 to 180 degrees with respect to the moving direction 500 of the mining vehicle 202 as illustrated in FIG. 5). Hence, the sensor 102 may be further configured to scan a side area of the mining vehicle 202. The side area may be located next to the corner of the bumper 206 where the sensor 102 is installed to. The side area may comprise, for example, an area covering 90 degrees measured from the corner of the mining vehicle 202, with respect to an axis 502 extending from the corner perpendicular to moving direction of the mining vehicle 202, to the side of the mining vehicle 202.

FIG. 4 illustrates an example of a partial view of a mining vehicle and an example of placement of a plurality of sensors in a mining vehicle, according to an example embodiment. The plurality of sensors may comprise the sensors 102 of the sensor system 100. In an embodiment, the plurality of sensors may comprise sensors 102 installed to both front lower corner sections of the carrier of the mining vehicle 202. The sensors 102 may be installed, for example, to both sides of the bumper 206. The plurality of sensors may further comprise at least one sensor 102 installed to a center region of the bumper 206. The center region of the bumper may be located between the sides of the bumper 206.

In an embodiment, the installation slot 200 may extend substantially along a whole length of the bumper 206 and provide a recess to the plurality of sensors. In addition to the plurality of sensors, the installation slot 200 extending substantially the whole length of the bumper 206 may comprise, for example, headlights of the mining vehicle 202. The installation slot 20 may be also configured for installation of other components of the mining vehicle 202 that may be prone to breakage due to impacts. Alternatively, the mining vehicle 202 may comprise separate installation slots 200 for each sensor 102 and/or the headlights or other fragile components of the mining vehicle 202. The headlights and/or other fragile components may be recessed within the installation slot 200 such that they may be protected from impacts.

When the mining vehicle is tramming, the booms may be in a straight position in align with the attachment point in a forward driving direction of the mining vehicle or in a raised position above the attachment point. If the booms comprise hoses, the hoses may be arranged in such a way that they hang as little as possible. The sensor 102 may be parametrized by the at least one computing device 106 so that the sensor 102 may not react to objects higher than a set threshold height. Alternatively, the plurality of applications may be configured to consider only measurement data comprising measurements obtained below the threshold height. The set threshold height may comprise, for example, a scanning height corresponding to a height of the attachment point of the at least one boom 204. Alternatively, the threshold height may be set to have any value below the height of the attachment point of the boom 204. Yet due to the placement of the sensor 102, the sensor 102 may be able to detect objects below the booms 204 and in front of the mining vehicle 202. By positioning the at least one sensor 102 at a low position in the carrier, the at least one sensor 102 may be able to provide measurement data usable by a plurality of applications configured to monitor different areas around the mining vehicles or for different purposes. The low position may be a position located at the front side of the carrier below a rooftop level of the carrier. The low position may be located, for example, below the at least one boom or at the front lower corner section such as at the bumper of the mining vehicle.

For example, the measurement data may be applied by both the collision avoidance and access detection applications when the view of the sensor 102 is not obstructed by the booms 204. Further, obstacles that may affect tramming safety, such as people, may be located on the ground level. The position of the sensor(s) 102 may be also suitable for providing measurement data to other applications, such as the simultaneous localization and mapping application and non-safety critical obstacle detection application, for example. In an embodiment, the sensor(s) 102 located low at the carrier may be dedicated for one of one or more vehicle safety applications. The mining vehicle 202 may further comprise one or more additional sensors, such as lidars, on top of the carrier for mapping or localization purposes.

By positioning the at least one sensor 102 to the carrier below the booms, no complicated algorithms may be needed to distinguish the booms from actual obstacles by the application. For example, the obstacle detection application may be configured to consider everything an obstacle, making the application simpler. The application may be thus configured to ignore any measurements higher than the set threshold height.

FIG. 5 illustrates an example of a field-of-view of sensors 102 mounted to installation slots in lower front corner sections of a mining vehicle 202, according to an example embodiment. The sensors 102 may be located within the mining vehicle 202 in a recess provided by the respective installation slot. The installations slots may have bevelled sides such that the sensors 102 may have a field-of-view of 0 to 180 degrees in front of the mining vehicle 202 with respect to an axis 502 extending from the front corner of the mining vehicle 202 perpendicular to the forward driving direction of the mining vehicle 202. The field-of-view enabled for the sensors 102 by the installation slots may be also measured with respect to a forward driving direction 500 of the mining vehicle 202, covering from -90 to 90 degrees field-of-view. The bevelled sides may be formed such that the field-of-view of the sensors 102 may further extend towards sides of the mining vehicle 202. For example, the field-of-view may extend 90 degrees with respect to the axis 502 away from the forward driving direction 500 of the mining vehicle 202. Hence, the field-of-view of the sensors 102 mounted to the installation slots may cover from -90 to 180 degrees with respect to the forward driving direction 500 of the mining vehicle 202. Further, because the sensors 102 are installed to the lower front corner sections of a carrier of the mining vehicle 102, the field-of-view of the sensors 102 may not be obstructed, for example, by one or more booms of the mining vehicle 202.

FIG. 6 illustrates an example of a method 600 for delivering measurement data of surroundings of a mining vehicle, according to an example embodiment. The method 600 may be implemented, for example, by the sensor system 100.

At 602, the method may comprise configuring a first port of a managed switch for a first application of a plurality of applications stored on at least one computing device. The at least one computing device may be further configured to execute the first application.

At 604, the method may comprise configuring at least one second port to at least one second application of the plurality of applications stored on the at least one computing device. The at least one computing device may be further configured to execute the at least one second application.

At 606, the method may comprise sending, by the managed switch, measurement data received from at least one sensor configured to scan the surroundings of the mining vehicle to the first port.

At 608, the method may comprise sending, by the managed switch, copies of the measurement data to the at least one second port.

It is obvious to a person skilled in the art that with the advancement of technology, the basic idea of the claimed invention may be implemented in various ways. The claimed invention and its embodiments are thus not limited to the examples described above, instead they may vary within the scope of the claims.

Further features of the methods directly result from the functionalities and parameters of the apparatus as described in the appended claims and throughout the specification and are therefore not repeated here. It is noted that one or more operations of the method may be performed in different order.

An apparatus may be configured to perform or cause performance of any aspect of the method(s) described herein. Further, a computer program may comprise instructions for causing, when executed, an apparatus to perform any aspect of the method(s) described herein. Further, an apparatus may comprise means for performing any aspect of the method(s) described herein. According to an example embodiment, the means comprises at least one processor, and memory including program code, the at one memory and the program code configured to, when executed by the at least one processor, cause performance of any aspect of the method(s).

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

As used in this application, the term 'circuitry' may refer to one or more or all of the following: (a) hardware-only circuit implementations (such as implementations in only analog and/or digital circuitry) and (b) combinations of hardware circuits and software, such as (as applicable):(i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. A sensor system in a mining vehicle, the sensor system comprising:
at least one sensor configured to scan surroundings of the mining vehicle;
at least one computing device configured to execute a plurality of applications;
a managed switch connected to the at least one sensor and the at least one computing device, wherein the managed switch is connected to the at least one computing device via a first port of the managed switch configured to forward data for a first application of the plurality of applications and via at least one second port configured to forward data for at least one second application of the plurality of applications; and
wherein the managed switch is configured to send measurement data of the surroundings from the at least one sensor to the first port and send a copy of the measurement data to the at least one second port.

2. The sensor system of claim 1, wherein the at least one sensor comprises a light detection and ranging sensor.

3. The sensor system of claim 1 or 2, wherein the at least one sensor comprises a radio detection and ranging sensor.

4. The sensor system of any of claims 1 to 3, wherein the at least one sensor comprises a time-of-flight camera.

5. The sensor system of any preceding claim, wherein the plurality of applications comprises at least one vehicle safety application.

6. The sensor system of claim 5, wherein the at least one sensor is configured to provide the measurement data based on parameter settings of the vehicle safety application.

7. The sensor system of any preceding claim, wherein the plurality of applications comprises an application configured for at least one of collision avoidance, access detection on a working area of a boom of the mining vehicle, obstacle detection, localization or mapping.

8. The sensor system of any preceding claim, wherein the at least one sensor is configured to scan the surroundings below a threshold height configured based on an attachment point of a boom of the mining vehicle.

9. A mining vehicle comprising the sensor system of any preceding claim, wherein the at least one sensor is installed to a front side of a carrier of the mining vehicle in a forward driving direction of the mining vehicle.

10. The mining vehicle of claim 9, wherein the front side of the carrier comprises at least one installation slot configured to form a recess, wherein the at least one sensor is mounted within the recess, and wherein the recess has bevelled sides to enable the at least one sensor to scan at least an area in the forward driving direction of the mining vehicle.

11. The mining vehicle of claim 10, wherein the at least one installation slot is located in at least one side of the front of the carrier and the installation slot has a bevelled side extending to at least one side of the mining vehicle such that the at least one sensor is enabled to scan an area located by the at least one side of the mining vehicle.

12. The mining vehicle of any of claims 9 to 11, wherein the mining vehicle comprises at least one boom, and the at least one sensor is installed in the front side of the carrier below an attachment point of the boom.

13. The mining vehicle of any of claims 9 to 12, wherein the at least one sensor is installed to a bumper of the mining vehicle.

14. A method for delivering measurement data on surroundings of a mining vehicle, the method comprising:
configuring a first port of a managed switch for a first application of a plurality of applications stored on at least one computing device;
configuring at least one second port to at least one second application of the plurality of applications stored on the at least one computing device;
sending, by the managed switch, measurement data received from at least one sensor configured to scan the surroundings of the mining vehicle to the first port; and
sending, by the managed switch, a copy of the measurement data to the at least one second port.

15. A computer program comprising instructions which, when executed by a computer, causes the computer to execute the method of claim 14.
